(19) Europäisches Patentamt
European Patent Office
Office européen des brevets

(11) Publication number: **0 496 908 A1**

(12) **EUROPEAN PATENT APPLICATION**

(21) Application number: **91101129.4**

(22) Date of filing: **29.01.91**

(51) Int. Cl.5: **G09B 1/06**, G09B 3/04, G09B 19/02, A63F 3/04

(43) Date of publication of application: **05.08.92 Bulletin 92/32**

(84) Designated Contracting States: **AT BE CH DE ES FR GB GR IT LI NL SE**

(71) Applicant: **Lin, Lon-Jeng**
**211, Ku Shan 2rd Road**
**Kaohsiung City(TW)**

(72) Inventor: **Lin, Lon-Jeng**
**211, Ku Shan 2rd Road**
**Kaohsiung City(TW)**

(74) Representative: **Füchsle, Klaus, Dipl.-Ing. et al**
**Hoffmann . Eitle & Partner Patentanwälte**
**Arabellastrasse 4**
**W-8000 München 81(DE)**

(54) **Self-teaching, self-checking educational arrangement.**

(57) The invention relates to a self-teaching, self-checking educational arrangement, comprising an answer plate (1) provided with a plurality of separated empty partitions (11) and the same number of answer cards (2) as the separated partitions (11) of the answer plate (1). In use, the answer cards (2) are placed in the separated partitions (11) according to the answer to a question chart, and then the user looks at the numerals or the equivalent on the bottom surfaces of the answer cards (2), carries out the addition of those cards (2) in each row, column or diagonal line, and then checks himself if the total is correct or not or does substraction and then checks if the answer is zero or not.

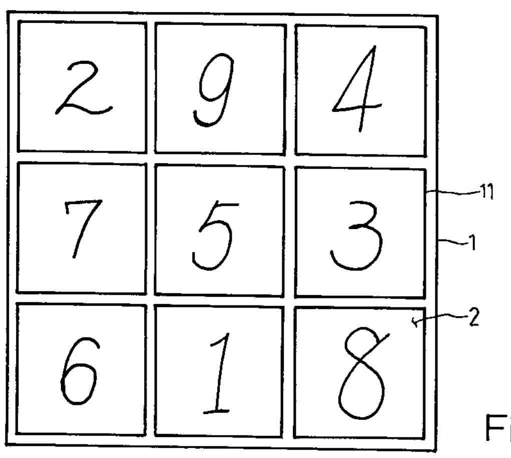


Fig.5

EP 0 496 908 A1

Enlightening education for young children has been gradually made much of as the standard of living has been improved more and more. Accordingly, a large number of teaching materials for young children have incessantly been offered in market, and generally there are two kinds, one is unchangable and abother changable. The former is more widely seen than the latter, such as traditional printed matters including teaching contents and questions for matching, telling the true from the false, calculation, etc. with empty spaces for making answers therein. This sort of teaching materials do not suit for repetitional use, nor have self-teaching function.

A changable teaching material in market now comprises a large question card, a large answer card corresponding to the large question card, an answer plate, and a set of answer number cards for interrelated handling. At first, a learner finds out the answer in the large answer card to a question in the large question card one after another, then he picks out an answer number card having the same mark as the answer in the large answer card, and puts the answer number card on the answer plate one after another untill all the answer cards are put therein.

This teaching material is planned for self-teaching, and the learner reverses the answer plate after all the answer number cards are put therein, and then the lid is opened to make the numbers on the upper surfaces appear. Then he compares the pictures on the bottom surfaces of the number cards to the pictures on the large answer card or the large question card to see if the pictures on both the number cards and the large answer card are the same or not. If they are the same, he knows his answers are right, and if not, his answers are wrong. The contents of the large question card and the large answer card can be very wide, almost limitless, and the answer plate and the set of answer cards are not needed to change, having an ideal learning effect. But in practical use, the answer plate and the answer number cards have the following disadvantages to be improved.

1. The pictures for self-teaching are already printed on the large question card and the large answer card to lose secret feature so that some learners are prone ot arrange the answer number cards according to the large answer cards without looking at the question card. Therefore it loses its original object.
2. In answering, only comparing the pictures therein can attain the purpose, having no other additional learning contents and training, and the self-teaching process invlolved is very simple and easy.
3. In handling this material, the answer plate has to be covered with a lid after finishing all the answers and to bereversed and opened again so that learners, mostly young children, can easily let the answer plate to fall down carelessly allowing the answer number cards to drop off.
4. For comparatively old children, this plan of comparison of pictures for answer is too easy, simple, devoid of interest, educational function and training.

## Summary Of The Invention

This invention comprises an answer plate provided with a plurality of separated empty partitions and a soft transparent layer at the bottom side of each partition, and the same number or answer cards as the pa partitions of the answer plate. Each answer card has the bottom surface written with a numeral or the equivalent and can be put in any of the partitions so that the numeral on the bottom surface of each answer card can be seen through the bottom side or the transparent layer of the answer plate when put therein.

The elevational shape of the answer cards and the partitions of the answer plate is the same and can be circular, square, triangular, etc. On the upper surface of each answer card is a geometrical shape, a letter or a sign different from one another and on the bottom surface a numeral or an equivalent different from one another, and the largest numeral is the same as the number of the answer cards.

In using this invention, a user or learner first finds out the correct answer from the answer chart according to a question on the question chart and picks out an answer card having the same shape on the upper surface as that on the answer chart, and the answer card orderly placed in the partitions of the answer plate. The partitions are arranged to have the same number of row and column in the square plate, and all the answer cards, after placed in the partitions, have also the same number of cards in each row, column or diagonal line, for example, 3 answer cards in Fig. 5, and the total of the numerals on the bottom surf surfaces of the answer cards in each row, column or diagonal line are all the same, 15, or the subtraction of them from 15 the preset number - is all the same, 0. After the user finishes answers, he checks himself if the answer is correct or not by doing addition or subtraction for each row, column or diagonal line.

## Brief Description Of The Drawings

Figure 1 is an elevational and a cross-sectional view of the first embodiment of the answer plate in the present invention.

Figure 2 is an elevational and a cross-sectional view of the second embodiment of the answer plate in the present invention.

Figure 3 is an elevational and a cross-sectional view of the third embodiment of the answer plate in the present invention.

Figure 4 is an elevational view of the answer plate with the answer cards put on in the present invention.

Figure 5 is an elevational view of the bottom surface of Fig. 4.

Figure 6 is an elevational view of an example showing numerals on the bottom surface of the answer cards in the present invention.

Figures 7-10 are elevational views of the bottom surface of the answer plates having four answer cards in each row, column and diagonal line in the present invention.

Figure 11 is an elevational view of the question chart in the present invention.

Figure 12 is an elevational view of the answer chart in the present invention.

## Detailed Description Of The Invention

Fig. 1 shows the first embodiment of the answer plate according to the present invention, wherein the answer plate 1 is a flat board of a square shape, comprising the same number of separated empty partitions 11 as the answer cards 2 and a soft transparent layer 12 at the bottom of each separated partition 11. The numeral written on the bottom surface of the answer card can be seen through the layer 12 from the bottom side of the answer plate 1.

Fig. 2 shows an answer plate 1A made foldable in half and comprising the same number of separated empty partitions 11 as that of the answer cards 2. Each separated partition has a soft transparent layer 12 at the bottom so that the numeral written on the bottom surface of th answer card can be seen directly from the bottom side of the answer plate 1, which can be folded in half when it is not in use.

Fig. 3 shows the third embodiment of the answer plate 1B, which is a single board comprising the same number of separated empty partitions 11 as that of the answer cards to be put therein.

The method of keeping the answer card in the separated empty partition from dropping off can be the equal size of the both utilizing resilient function and friction effect of the peripheral edges of the both or projections and grooves.

The answer card 2 and the separated empty partition 11 have the same elevational shape such as circular, square, triangular, multi-gonal, etc. On the upper surface of the answer card is written or printed a different geometrical shape, letter or sign, and on the bottom surface a different numeral or a numeral substitute. The largest numeral is the total of the answer cards.

Next, referring to Fig. 4, at first in using this invention, a user or learner chooses and takes out the correct answer cards 2 according to the upper surface from the set of the answer cards 2 for answering the question in the question chart and places the correct answer cards 2 in the separated empty partitions 11 in order of the questions. Now referring to Fig. 5, the bottom surface of Fig. 4, the total number of the answer cards 2 and the numeral or the equivalent on the bottom surfaces are arranged in a matrix. For example, in Fig. 5, the total number of the a answer cards is 9 and the numeral on the bottom surfaces is 1 to 9, and all the cards 2 are arranged 3 cards in a row and a column, and there are three rows and three columns to contain 9 cards. The total of each row of column or diagonal line is 15 or 0 in the subtraction so that the learner can check his own answers is right or not by addition or subtraction. The central answer card 2 must have the numeral 5 or the equivalent on its bottom surface in this 3 card unit matrix plan.

Next, referring to Fig. 6, this is an embodiment of the answer cards 2 having a number of the same shapes, a circle here in this example, is used instead of an Arabic numerals, for use of children of younger age.

Figs. 7-10 show an embodiment of the answer cards 2 arranged in a 4 card unit matrix, wherein is included 4 rows and 4 columns having 4 cards each. The total in every row or column or diagonal line is 34. And the arrangement of the cards 2 can be altered in many ways, for example, the first numeral at the upper leftmost corner on Fig. 7 can be any of 0-16, then the rest numerals are accordingly altered to have an total of 34 in every row, column or diagonal line. Or the left two columns in Fig. 7 can be transfered to the right two columns as shown in Fig. 8, which can be changed into Fig. 10 by transferring the first left column to the first right column. However, the total of every row, column or diagonal line is the same preset number, and a user does addition or subtranction in answer to the questions and then check himself if his a answer is right or not.

Fig. 11 shows an example of the question chart 3 and Fig. 12 that of the answer chart 4. There charts 3 and 4 have no answers shown thereon, but have to be used as shown in Figs. 4 and 5. For example, the first question in the question chart 3 is "apple" shown in the center of the answer chart 4. In answering, a user picks out the answer card 2 having the same shape or mark "△" as the auxiliary shape or mark "△" on the answer chart 4 and then places it in the correct partition of the answer plate 1. After all the answer cards 2 are put in the partitions, he does addition or subtraction according to the numerals on the bottom surface and checks the answers himself.

This invention is considered to have the following practical functions and features.

1. Self-teaching proces is done directly, simply and practically, as a user can check his own answer by looking at the numerals or the equivalent shown on the bottom surfaces of the answer cards.
2. Checking his own answer can attain calculation training effect and worthiness, as checking the answer has to involve calculation by addition or subtraction based on the 3 or 4 card unit matrix.
3. Checking process has practicability and leads to good training, as there are no charts for self-checking, and checking involves calcu
4. The upper surface of the answer card helps a user to learn to know and recognize geometrical shapes, letters or signs.
5. Not only the question chart can furnish a user with knowledge, but laso the upper surfaces of the answer cards train him to know and recognize things, letters or signs. Besides, the arrangement and combination of the bottom surface of the answer cards can give a user training in addition and subtraction and in checking his own answers.
6. Every unit has an independent training content and effect so th that the whole combination of the answer plate and the answer cards has exclusive valve and function for giving children enlightening education.

## Claims

**1.** A self-teaching, self-checking educational arrangement, comprising:

(a) a question chart having a plurality of questions arranged thereon in a predetermined order;

(b) an answer chart having a plurality of answers, one for each said question, arranged thereon, said answer chart also having unique visible marks, each associated with a respective answer;

(c) a plurality of answer cards, one for each answer, and having top surfaces respectively bearing said marks, and bottom surfaces respectively bearing arithmetic numbers; and

(d) an answer plate having an upper surface, a lower surface opposite the upper surface, and walls bounding a plurality of compartments, one for each answer card said compartments being open for receiving the answer cards in said predetermined order, all of said marks being visible at the upper surface of the answer plate, and all of said arithmetic numbers being visible at the lower surface of the answer plate, and being arranged in a predetermined mathematical pattern when all the answer cards have been received in said predetermined order in the compartments, thereby enabling a user to check mathematically that all said questions were correctly answered.

**2.** The arrangement according to claim 1, wherein each compartment and each answer card have the same shape, and wherein each answer card is friction-tightly received and held in a respective compartment.

**3.** The arrangement according to claim 1, wherein the answer plate has a transparent sheet overlying the lower surface of the answer plate.

**4.** The arrangement according to claim 1, wherein each compartment has open opposite ends.

**5.** The arrangement according to claim 1, wherein the answer plate is foldable.

**6.** The arrangement according to claim 1, wherein the answer plate is subdivided into horizontal rows and vertical columns.

**7.** The arrangement according to claim 6, wherein each row and column includes three compartments.

**8.** The arrangement according to claim 6, wherein each row and column includes four compartments.

**9.** The arrangement according to claim 1, wherein the marks are different geometrical symbols.

**10.** The arrangement according to claim 1, wherein the arithmetic numbers are Arabic numerals.

**11.** The arrangement according to claim 1, wherein each arithmetic number is a numerical equivalent constituting a number of symbols.

**12.** The arrangement according to claim 1, wherein the predetermined mathematical pattern is a square array of an equal number of horizontal rows and vertical columns, said square array having a pair of intersecting diagonals.

**13.** The arrangement according to claim 12, wherein said arithmetic numbers, when summed along each row, column and diagonal, add up to the same predetermined sum.

**14.** The arrangement according to claim 12, wherein said arithmetic numbers, when subtracted from a predetermined constant along each row, column and diagonal, equal zero.

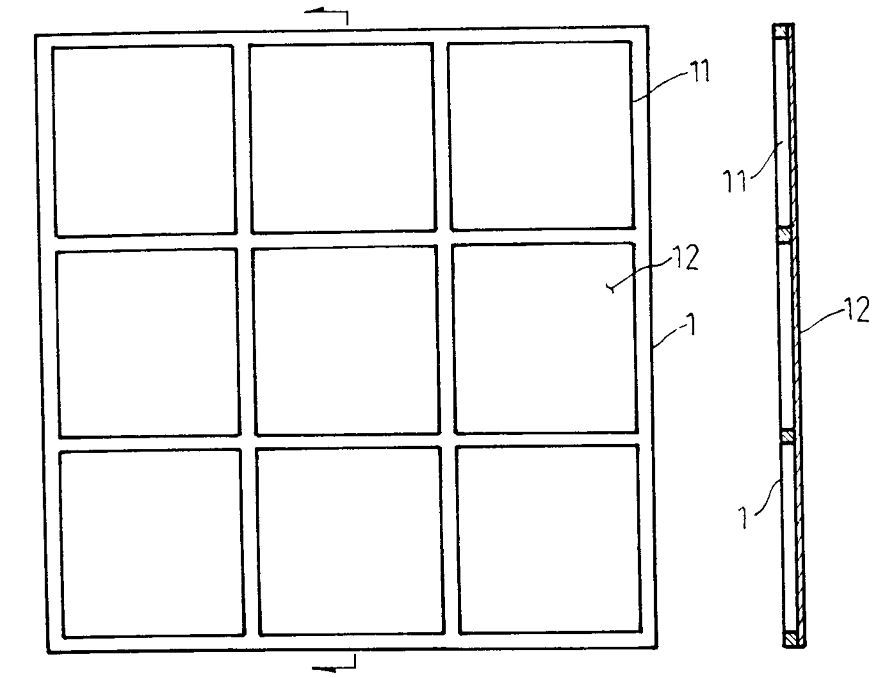


Fig.1

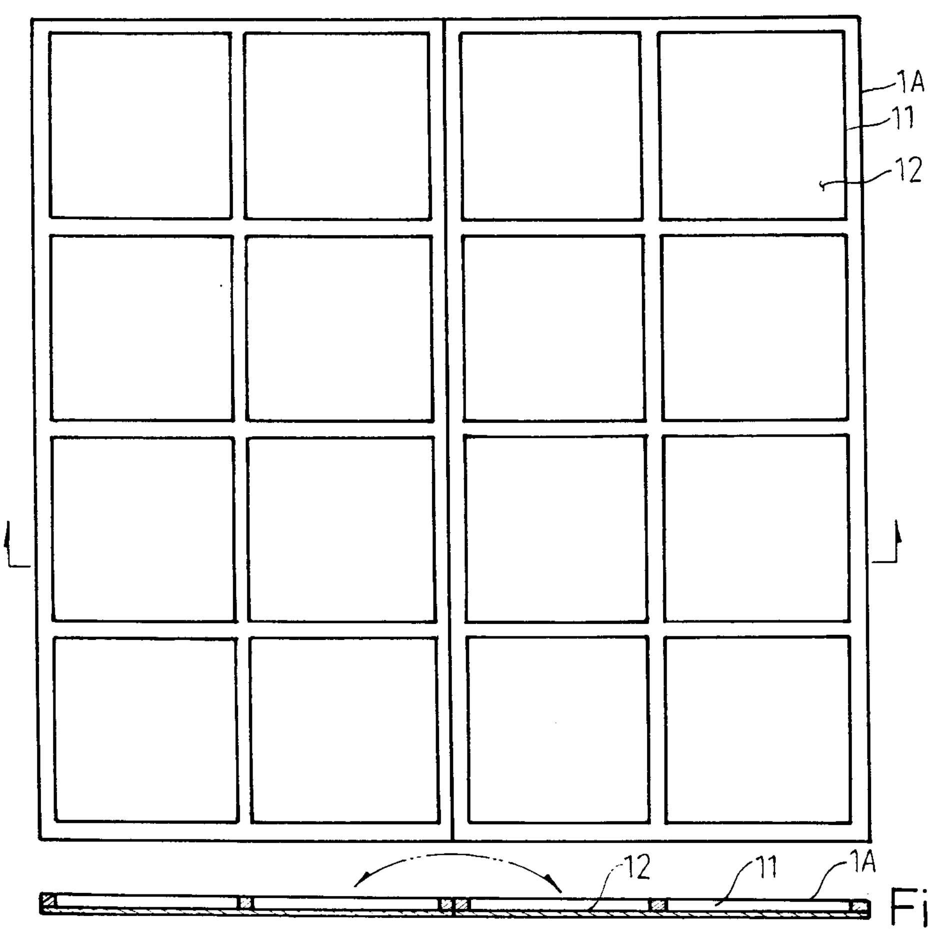


Fig.2

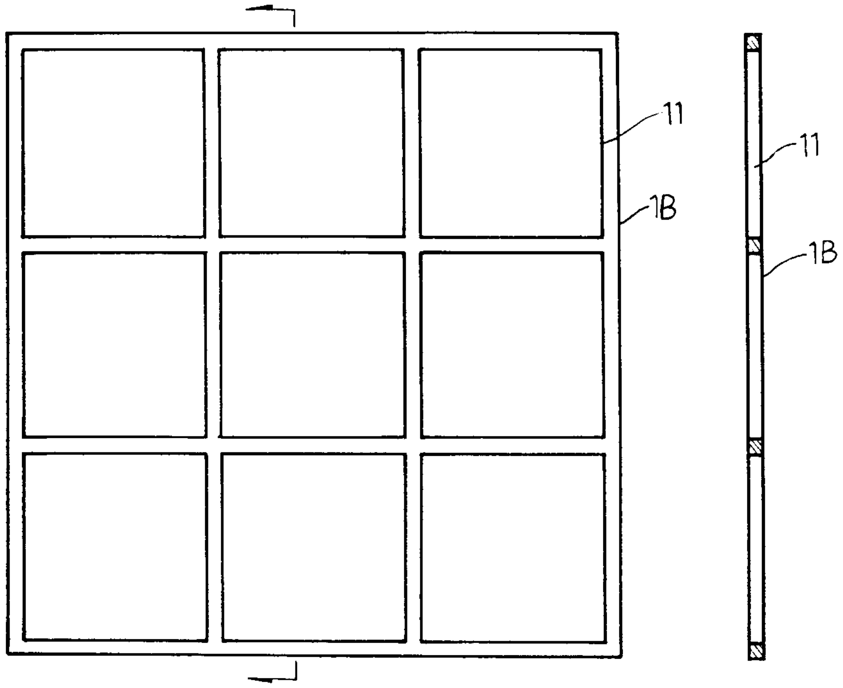


Fig. 3

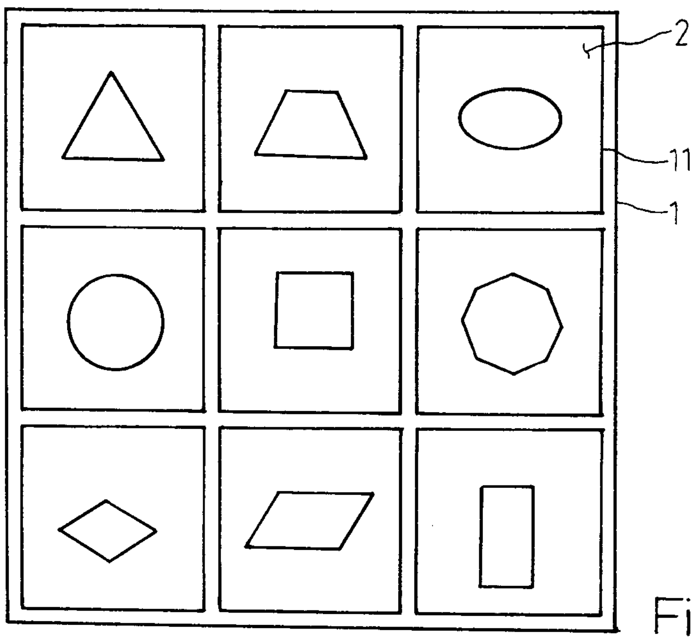


Fig. 4

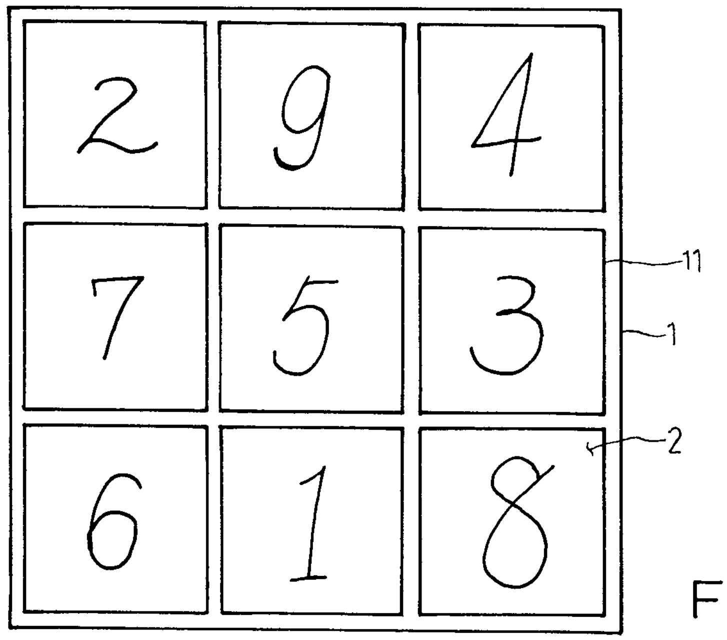


Fig. 5

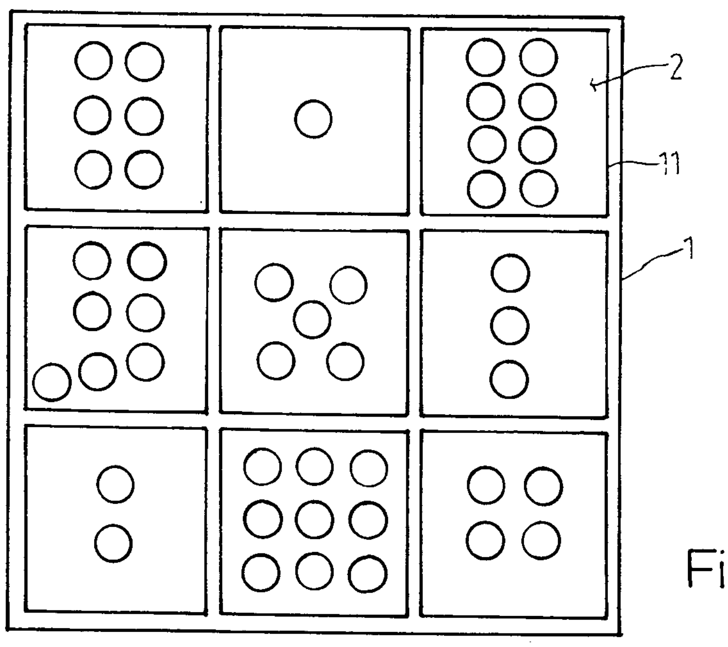


Fig. 6

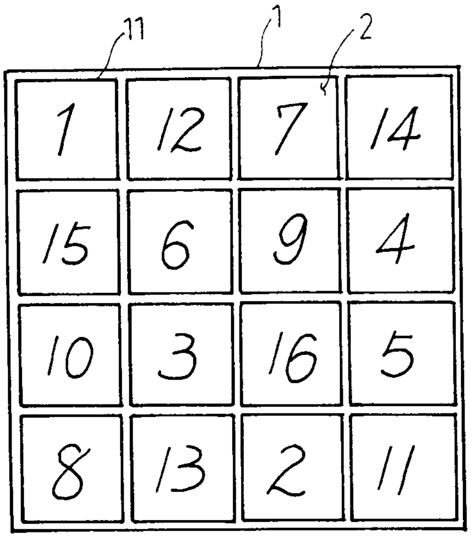


Fig. 7

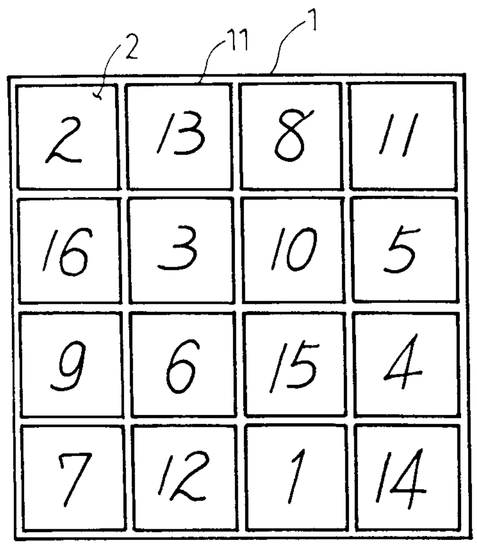


Fig. 8

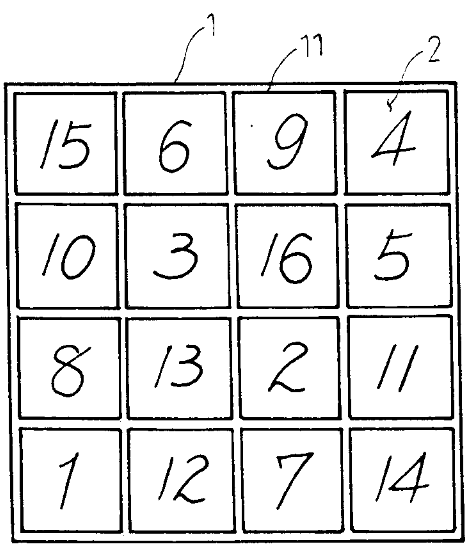


Fig. 9

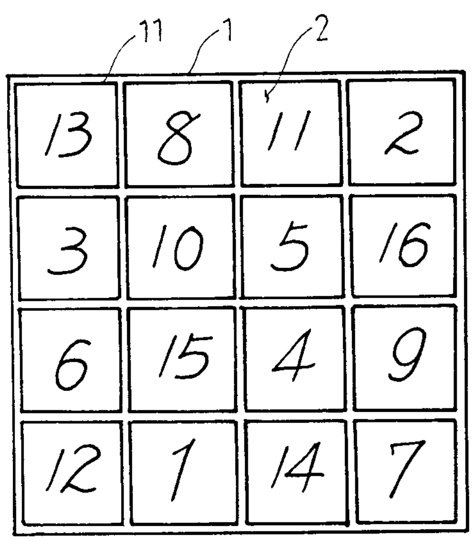


Fig.10

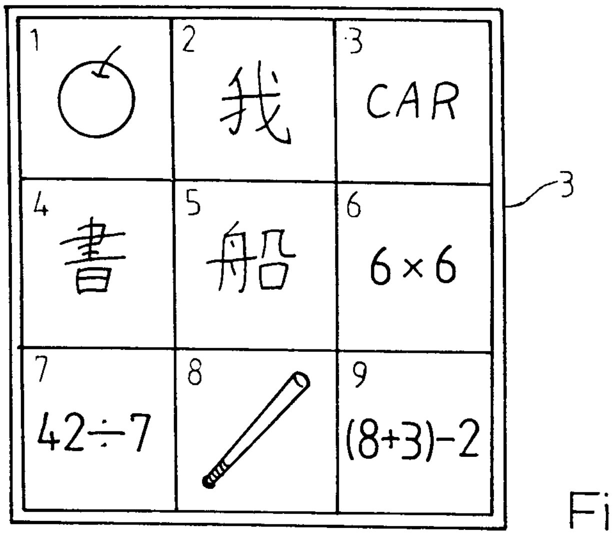


Fig.11

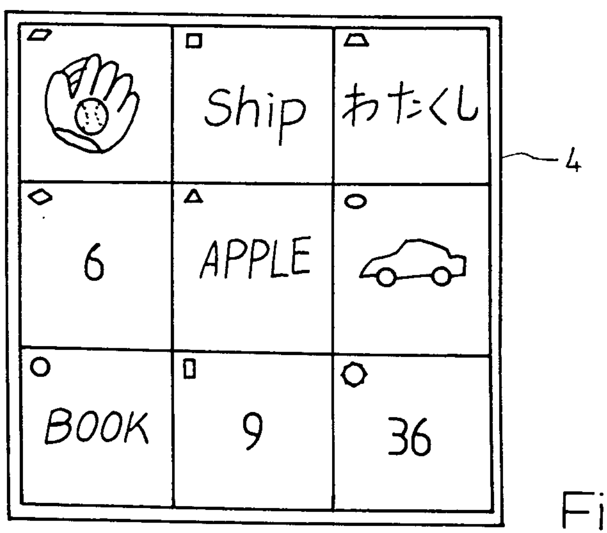


Fig.12

European Patent Office

# EUROPEAN SEARCH REPORT

Application Number

EP 91 10 1129

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 127 873 (J. BIRVAR)<br>* the whole document * | 1,2,7,8, 10,12-14 | G09B1/06<br>G09B3/04<br>G09B19/02<br>A63F3/04 |
| X | EP-A-0 377 396 (A. SERRAT PALOU)<br>* column 1, line 51 - column 4, line 51; claims; figures * | 1,4,6 | |
| A | FR-A-2 481 647 (O.G.R. BOUGOURO)<br>* page 1, line 1 - page 2, line 37; claims 1-3 * | 1,2 | |
| A | DE-A-2 916 683 (TICH, CY, BELHAVEN, N.C.)<br>* page 17, paragraph 1 - page 26, paragraph 1; figures * | 1,4 | |
| A | GB-A-1 408 978 (J.R. HARTE)<br>* claims; figures * | 1,2 | |
| A | US-A-3 724 102 (C.A. VAN PATTEN)<br>* column 5, line 25 - column 8, line 50; figures * | 1,3 | **TECHNICAL FIELDS SEARCHED (Int. Cl.5)** |
| A | US-A-4 419 080 (CLASS PRESS, INC.)<br>* claims; figures * | 1 | G09B<br>A63F |
| A | FR-A-2 008 165 (E.H. BRAUER)<br>* claims; figures * | 1 | |
| A | US-A-3 999 310 (J.A. LUFKIN ET AL.)<br>* claims; figures * | 1,5 | |
| A | FR-E-0 083 419 (DELACHAMBRE, NEE A.J. ROY)<br>* claims; figures * | 1,2 | |

The present search report has been drawn up for all claims

| Place of search | Date of completion of the search | Examiner |
|---|---|---|
| THE HAGUE | 03 OCTOBER 1991 | GORUN M. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)